# FASCICULE DE BREVET EUROPEEN

(11) **EP 0 444 981 B1**
(45) Date de publication et mention de la délivrance du brevet: **19.05.1993**
(21) Numéro de dépôt: 91400238.1
(22) Date de dépôt: 31.01.1991
(51) Int. Cl.: B60G 17/04

(54) **Suspension hydropneumatique à raideur et amortissement variables**
Hydropneumatische Aufhängung mit veränderlicher Dämpfung und Steifheit
Hydropneumatic suspension using variable damping and stiffness

(30) Priorité: 28.02.1990 FR 9002534
(43) Date de publication de la demande: 04.09.1991
(73) Titulaire: AUTOMOBILES PEUGEOT, 75116 Paris (FR); AUTOMOBILES CITROEN, 92200 Neuilly-sur-Seine (FR)
(72) Inventeur: Richard, Denis, 94600 Choisy le Roi (FR); Dessirieix, Joel, F-91190 Gif-sur-Yvette (FR)
(74) Mandataire: Durand, Yves Armand Louis

(56) Documents cités:
- FR-A- 2 632 900

## Description

La présente invention a essentiellement pour objet une suspension hydropneumatique à raideur et amortissement variables, pour véhicule automobile.

On a déjà proposé des dispositifs de suspension hydropneumatique pour véhicule automobile, comportant trois niveaux de raideur et d'amortissemnt.

Plus précisément, on connait déjà une suspension hydropneumatique comprenant essentiellement un vérin hydraulique associé à chaque roue du véhicule et muni de deux accumulateurs hydropneumatiques de caractéristiques élastiques différentes et susceptibles de coopérer sélectivement par l'intermédiaire de leur moyen amortisseur respectif avec ledit vérin hydraulique, tandis qu'un moyen de régulation à tiroir commandé manuellement ou automatiquement par l'intermédiaire de paramètres de fonctionnement du véhicule permet la mise en communication du vérin hydraulique associé à chaque roue, soit avec les deux accumulateurs de façon simultanée pour obtenir une suspension dite souple, soit uniquement avec l'un ou l'autre des deux accumulateurs pour obtenir respectivement une suspension dite intermédiaire ou une suspension dite ferme.

Ce type de suspension a été décrit dans le document FR-A-2 632 900 et nécessitait des améliorations en raison notamment du fait qu'il utilisait un distributeur hydraulique central de commande du moyen de régulation associé aux éléments porteurs correspondant aux quatre roues du véhicule, qui était d'une fabrication complexe et coûteuse.

Aussi, la présente invention a pour but de résoudre ce problème, ainsi que d'autres, en proposant une suspension hydropneumatique de type défini plus haut et essentiellement caractérisée en ce que le moyen de régulation est constituée par deux tiroirs en liaison hydraulique avec le vérin hydraulique de chaque roue et respectivement reliés aux deux accumulateurs hydropneumatiques équipant chaque vérin, ces deux tiroirs étant pilotés par une ou plusieurs électrovannes.

Suivant un premier mode de réalisation, cette suspension comprend deux électrovannes agissant sur les tiroirs de telle façon qu'on obtient une suspension ferme lorsque les deux électrovannes sont à l'échappement, une suspension intermédiaire lorsque les deux électrovannes sont excitées et ainsi mises en communication avec une source de pression, et une suspension souple lorsque l'une des électrovannes est excitée et l'autre mise à l'échappement.

On précisera encore ici que la structure des deux tiroirs en liaison hydraulique avec chaque vérin est telle qu'à la mise à l'échappement des deux électrovannes seul l'un des deux tiroirs assure la communication du vérin avec l'un des deux accumulateurs, qu'à l'excitation des deux électrovannes seul l'autre tiroir assure la communication du vérin avec l'autre accumulateur, et qu'à la mise à l'échappement de l'une des électrovannes et à l'excitation de l'autre électrovanne, les deux tiroirs assurent respectivement la communication du vérin avec les deux accumulateurs hydropneumatiques.

Suivant un autre mode de réalisation, la suspension conforme à l'invention comprend une seule électrovanne pouvant délivrer deux pressions différentes et agissant sur les tiroirs de telle façon qu'on obtient une suspension ferme lorsque ladite électrovanne est à l'échappement, une suspension intermédiaire lorsque ladite électrovanne délivre une première pression, et une suspension souple lorsque ladite électrovanne délivre une deuxième pression supérieure à la première.

On précisera ici que la structure des deux tiroirs en liaison hydraulique avec chaque vérin est telle qu'à la mise à l'échappement de l'électrovanne précitée seul l'un des deux tiroirs ou premier tiroir assure la communication du vérin avec l'accumulateur associé à ce tiroir, qu'à l'excitation de l'électrovanne pour délivrer la première pression, seul l'autre tiroir ou deuxième tiroir assure la communication du vérin avec l'accumulateur associé à ce deuxième tiroir en agissant à l'encontre de la force d'un ressort alors que le premier tiroir est fermé en agissant à l'encontre de la force d'un autre ressort, et qu'à l'excitation de l'électrovanne pour délivrer la deuxième pression, le premier tiroir se déplaçant à l'encontre de la force d'encore un autre ressort assure la communication du vérin avec l'accumulateur associé à ce premier tiroir alors que le deuxième tiroir assure lui aussi la communication du vérin avec l'accumulateur associé à ce deuxième tiroir.

Suivant une autre caractéristique de la suspension ci-dessus, les deux ressorts cités en dernier lieu sollicitent respectivement deux coupelles ou analogues à emboîtement dont l'une, à savoir celle qui est intérieure à l'autre, prend constamment appui sur l'une des extrémités du premier tiroir.

Selon encore une caractéristique de la suspension selon cette invention, les deux tiroirs associés au vérin de chaque roue avant sont sensiblement parallèles, tandis que les deux tiroirs associés au vérin de chaque roue arrière sont orthogonaux.

On ajoutera encore ici qu'aux deux électrovannes du premier mode de réalisation ou à l'électrovanne unique du deuxième mode de réalisation, est raccordé un calculateur électronique lui-même relié à des capteurs détectant certains paramètres de fonctionnement du véhicule.

On comprend donc déjà que le système à deux tiroirs réalisant la regulation au niveau des éléments porteurs correspondant aux quatre roues du véhicule, de même que la prévision d'électrovannes pour piloter les tiroirs est très facile et peu coûteuse à faire. Mais d'autres avantages et caractéristiques de l'invention apparaîtront mieux dans la description détaillée qui suit et se réfère aux dessins annexés, donnés uniquement à titre d'exemple et dans lesquels.

La figure 1 est une vue schématique d'un premier mode de réalisation de suspension hydropneumatique conforme à cette invention .

La figure 2 est une vue de dessus et en coupe horizontale de la tête d'un élément porteur de roue avant équipant cette suspension.

La figure 3 est une vue de dessus et en coupe horizontale d'un élément porteur de roue arrière équipant cette suspension.

La figure 4 est une vue schématique d'un deuxième mode de réalisation de suspension selon cette invention.

La figure 5 est une vue de dessus et en coupe horizontale de la tête d'un élément porteur de roue avant équipant cette deuxième réalisation de suspension.

La figure 6 est une vue en coupe horizontale et de desus de la tête d'un élément porteur de roue arrière équipant cette réalisation.

Les figures 7 à 9 sont des vues en coupe et à plus grande échelle illustrant schématiquement la structure et le fonctionnement de l'un (montré partiellement) des deux tiroirs constituant le moyen de régulation associé à chacun des quatre éléments porteurs de cette deuxième réalisation de suspension.

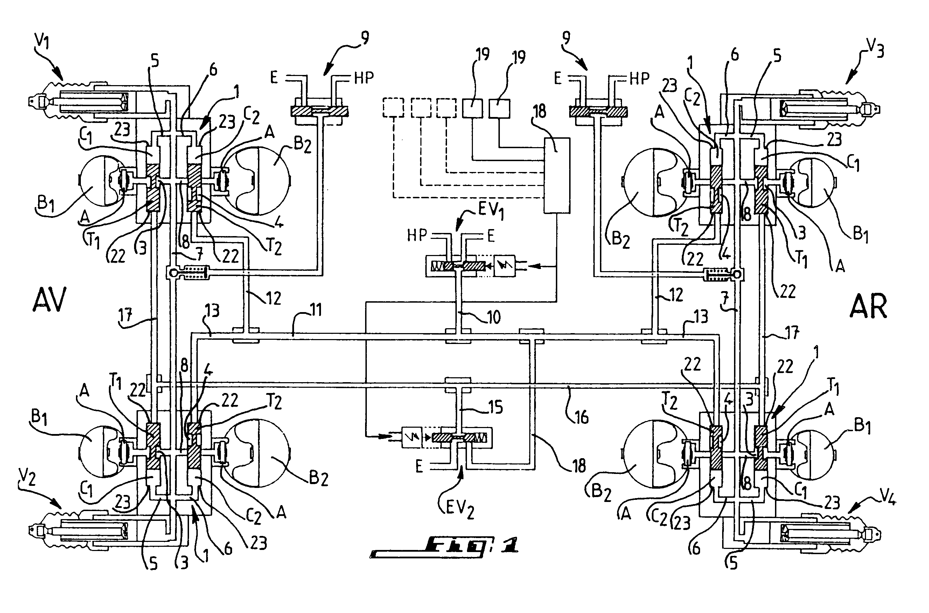

En se reportant à la figure 1, on voit que la suspension représentée comprend, pour l'essieu avant d'un véhicule, deux vérin hydrauliques V₁, V₂ montés entre roue et caisse, et pour l'essieu arrière, deux vérins hydrauliques V₃, V₄ associés à chaque roue arrière, ces quatre vérins formant des éléments porteurs qui sont chacun pourvus de deux accumulateurs ou blocs hydropneumatiques, dont l'un B₁ est de volume plus petit que l'autre B₂. Ces blocs ou sphères hydropneumatiques B₁, B₂ sont du type à membrane séparant, comme connu en soi, un gaz, tel que l'azote, d'un liquide hydraulique et comportent chacun leur propre amortisseur repéré en A. Ces amortisseurs A sont de type à trou calibré et clapet flexible, le diamètre du trou (non représenté) et la composition des clapets (non représentés) déterminant le taux d'amortissement.

Le système de régulation selon l'invention est intégré dans une tête 1, chaque tête comprenant deux tiroirs T₁, T₂ coulissant respectivement dans deux chambres C₁, C₂ et comportant chacun une partie de diamètre réduit définissant une chambre annulaire repérée en 3 et 4.

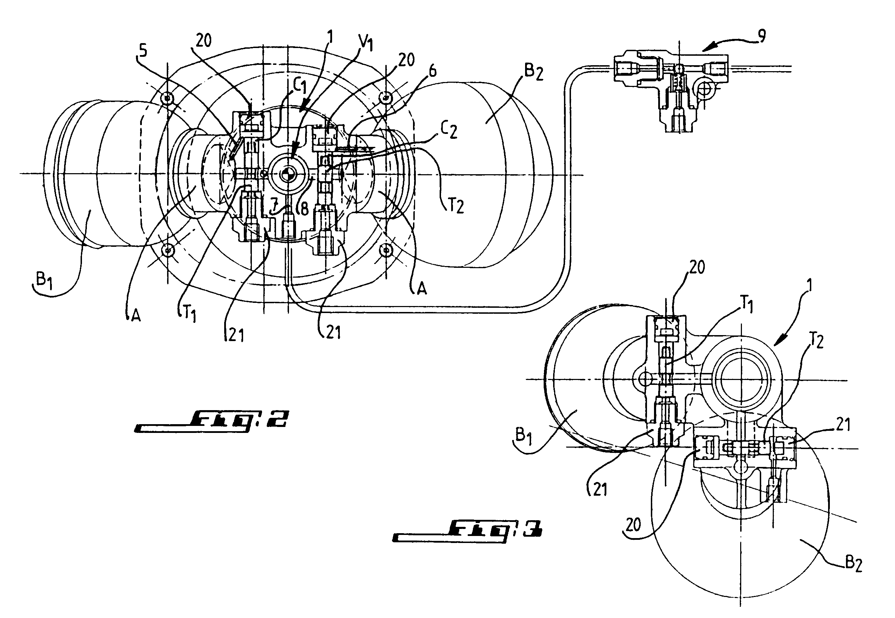

Chaque vérin V₁, V₂, V₃, V₄ est relié aux chambres C₁, C₂ dans lesquelles coulissent les tiroirs T₁, T₂ par deux passages 5 et 6 visibles sur la figure 1 et également sur la figure 2 qui illustre la réalisation pratique de l'élément porteur montré en haut et à gauche sur la figure 1.

Le déplacement des tiroirs T₁, T₂ dans les chambres C₁, C₂ permet la liaison hydraulique du vérin hydraulique V₁, V₂, V₃, V₄ avec les accumulateurs hydropneumatiques B₁ et/ou B₂, comme on le décrira plus loin à propos du fonctionnement, et cela grâce aux conduits 7 et 8. Comme on le voit sur la figure 1, les conduits 7 sont reliés chacun à un correcteur de hauteur montré schématiquement en 9.

Comme on le voit encore sur la figure 1, les huit tiroirs T₁, T₂ sont commandés par deux électrovannes repérées en EV₁ et EV₂. L'électrovanne EV₁ est reliée par des conduites 10, 11, 12, et 13 aux chambres C₂ dans lesquelles coulissent les tiroirs T₂, tandis que l'électrovanne EV₂ est reliée aux chambres C₁ dans lesquelles coulissent les tiroirs T₁ par des conduites 15, 16 et 17, cette électrovanne EV₂ étant également reliée à la conduite 11 par un conduit 18.

Les électrovannes EV₁ et EV₂ sont pilotées suivant les ordres d'un calculateur électronique 18 qui analyse et interprète des données fournies par plusieurs capteurs 19 qui délivrent des signaux correspondant à la détection d'un certain nombre de paramètres de fonctionnement du véhicule et tels que par exemple sa vitesse, l'angle et la vitesse du volant, l'accélération, le freinage etc... . On peut également, sans sortir du cadre de l'invention, prévoir un pilotage manuel des électrovannes.

En se reportant plus particulièrement aux figures 2 e 3, on voit que les tiroirs T₁, T₂ sont limités dans leur course par des bouchons 20 et 21 aux extrémités des chambres C₁, C₂, les bouchons 21 recevant les conduites venant des électrovannes. On observera encore ici que les deux tiroirs T₁, T₂ associés au vérin V₁, V₂ de chaque roue avant sont sensiblement parallèles, comme on le voit bien sur les figures 1 et 2.

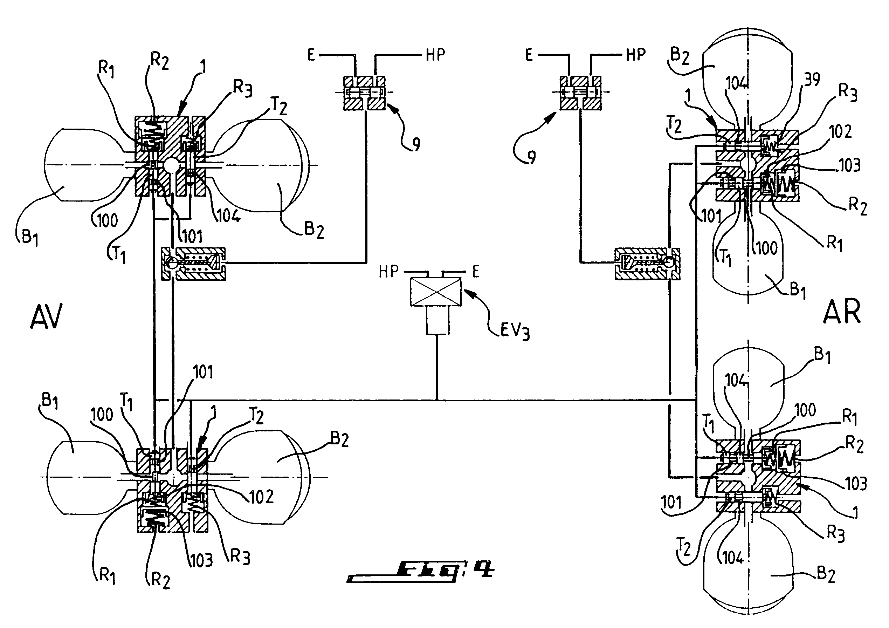

Par contre, pour ce qui concerne les deux tiroirs T₁, T₂ associés à la tête 1 de chaque élément porteur de roue arrière, ces tiroirs qui sont montrés parallèles sur le schéma de la figure 1, sont en réalité disposés orthogonalement, comme on le voit bien sur la figure 3.

Ayant ainsi décrit la structure de la suspension illustrée par les figures 1 à 3, on en décrira maintenant le fonctionnement comme suit.

En position de suspension ferme, qui est la position illustrée par les figures 1 à 3, les électrovannes EV₁ et EV₂ sont à l'échappement E et les deux tiroirs T₁, T₂ sont en butée en 22 sous l'action de la pression de suspension délivrée par les vérins V₁, V₂, V₃, V₄. Dès lors, comme on le voit bien sur les figures, seul le bloc hydropneumatique B₁ de plus petit diamètre est en communication hydraulique par la chambre annulaire 3 de l'un T₁ des deux tiroirs avec le vérin hydraulique V₁, V₂, V₃, V₄. En d'autres termes, seul le bloc hydropneumatique B₁ est en communication avec les éléments porteurs.

Pour obtenir une position de suspension dite intermédiaire, les deux électrovannes EV₁ et EV₂ sont excitées et par conséquent mises en communication avec la haute pression qui agit sur les tiroirs T₁ et T₂, lesquels viennent buter en 23, au fond de l'extrémité des chambres C₁, C₂, à l'opposé de l'extrémité ou fond 22 dont il a été question précédemment. Car, dans ce cas, la haute pression délivrée par les électrovannes est supérieure à la pression de suspension. Comme on peut le comprendre en se reportant à la figure 1, seul le bloc hydropneumatique B₂ de plus grand volume sera alors en communication hydraulique avec l'élément porteur ou vérin V₁, V₂, V₃, V₄ via la chambre annulaire 4 du tiroir T₂.

Enfin, pour obtenir une suspension dite souple, l'électrovanne EV₁ est excitée, et l'électrovanne EV₂ est à l'échappement E. Dès lors, les tiroirs T₁ sont en butée en 22 sous l'action de la pression de suspension et permettent (comme on le voit sur la figure 1) la communication des éléments porteurs ou vérins V₁, V₂, V₃, V₄, avec les accumulateurs hydropneumatiques B₁. Quant aux tiroirs T₂, sous l'effet de la haute pression délivrée par l'électrovanne EV₁, ils viennent en butée en 23 sous l'action de la haute pression et font également communiquer les éléments porteurs ou vérins V₁, V₂, V₃, V₄ avec les blocs hydropneumatiques de plus grand volume B₂.

On observera encore ici que, dans tous les cas de figure, s'il se produit une défaillance électronique, la suspension se placera automatiquement en position "ferme", comme représenté sur la figure 1. Autrement dit, la pression de suspension provoque la mise des tiroirs T₁, T₂ en butée en 22, et seuls les blocs hydropneumatiques B₁ seront en communication avec les éléments porteurs.

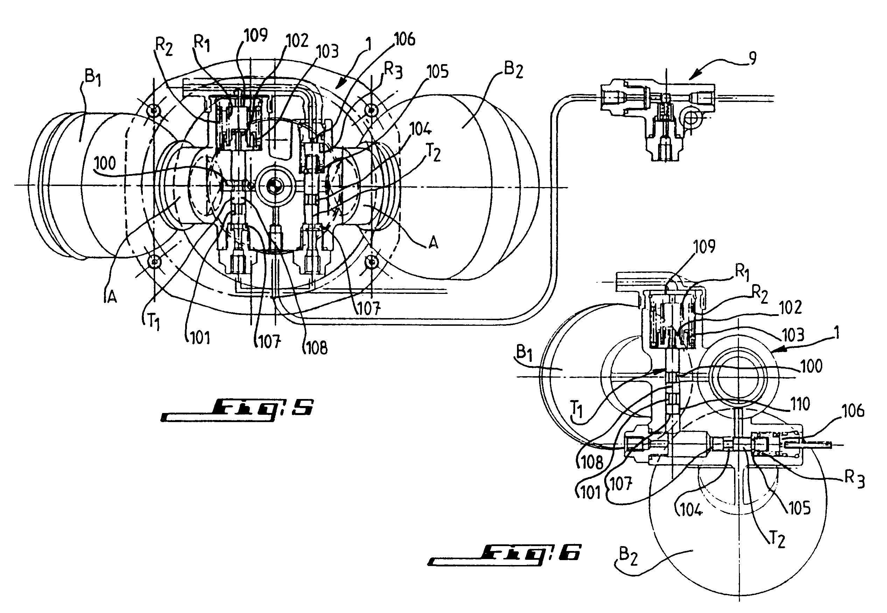

On décrira maintenant le deuxième mode de réalisation de suspension selon cette invention, en se reportant aux figures 4 à 8.

Cette variante se distingue du mode de réalisation décrit précédemment, par le fait qu'on prévoit une électrovanne unique EV₃ (figure 4) conçue de telle façon qu'elle puisse délivrer deux pressions, par exemple 40 bars et 80 bars respectivement.

Ainsi, l'électrovanne EV₃ pourra agir sur les tiroirs T₁, T₂ de telle façon qu'on obtiendra une suspension ferme lorsque l'électrovanne est à l'échappement, une suspension intermédiaire lorsque l'électrovanne délivre une première pression et une suspension souple lorsque l'électrovanne délivre une deuxième pression supérieure à la première.

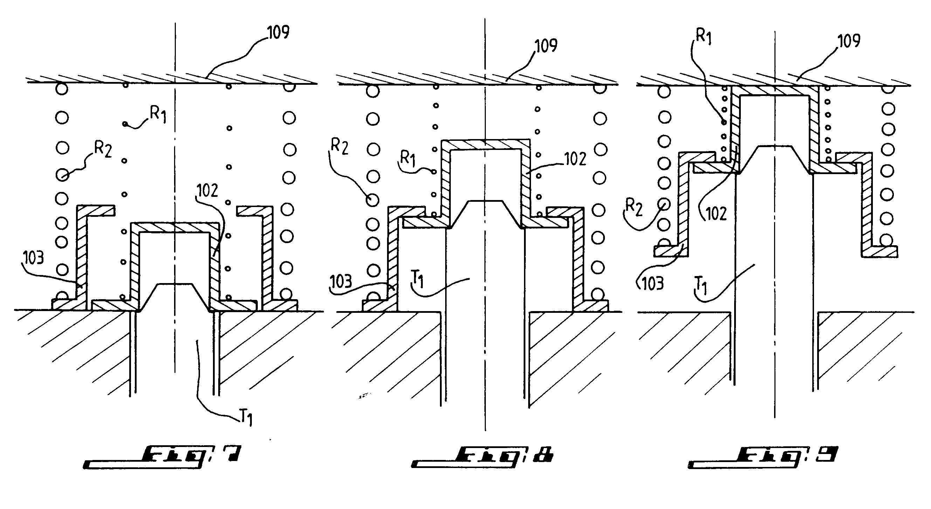

Mais avant de décrire en détail le fonctionnement de cette suspension, on décrira tout d'abord la structure des deux tiroirs T₁ et T₂ associés à la tête 1 de chaque élément porteur, ces tiroirs étant représentés schématiquement sur la figure 4, mais très complètement sur la figure 5 pour ce qui concerne les deux tiroirs associés à chaque élément porteur de l'essieu avant du véhicule, et sur la figure 6 pour ce qui concerne les deux tiroirs associés à chaque élément porteur de l'essieu arrière.

Le tiroir T₁ comporte deux parties de diamètre réduit formant dans la chambre dans laquelle il coulisse deux chambres annulaires repérées en 100 et 101. Sur une extrémité du tiroir T₁, comme on le voit mieux sur les figures 7 à 9, prend appui une première coupelle 102 sollicitée par un ressort R₁ et montée emboîtée et coulissante dans une deuxième coupelle 103 elle-même sollicitée par un autre ressort R₂.

Le tiroir T₂, quant à lui, comporte une seule partie de diamètre réduit définissant une seule chambre annulaire 104. Ce tiroir T₂ comporte un jonc 105 ou analogue sur lequel prend appui un ressort R₃. Le tiroir T₂ est donc un tiroir à deux positions, c'est-à-dire qu'il peut être soit en butée sur le jonc 105 sous l'action du ressort R₃, soit en butée en 106 sous l'action de l'une ou l'autre des deux pressions délivrées par l'électrovanne EV₃. Par contre, le tiroir T₁ est un tiroir à trois positions illustrées respectivement par les figures 7 à 9 et que l'on décrira en détail plus loin à propos du fonctionnement.

Comme c'était le cas pour le premier mode de réalisation, on voit sur la figure 5 que les deux tiroirs T₁, T₂ associés à chacun des deux éléments porteurs de l'essieu avant sont parallèles, tandis que les deux tiroirs T₁, T₂ associés à chacun des éléments porteurs de l'essieu arrière sont disposés orthogonalement, comme on le voit bien sur la figure 6, étant entendu que le fonctionnement des tiroirs est le même, qu'ils soient parallèles (avant) ou perpendiculaires (arrière).

Mais, pour une meilleure compréhension de l'invention, on décrira ci-après en détail le fonctionnement de la variante de suspension qui vient d'être décrite.

Pour obtenir une position ferme, l'électrovanne EV₃ est mise à l'échappement E. Ainsi, comme on le voit bien sur les figures 5 et 6, les deux tiroirs T₁ et T₂ sont en appui en 107 sous l'action du ressort R₃ (tiroir T₂) et des ressorts R₁, R₂ (voir figure 7). Par conséquent, seul le bloc hydropneumatique B₁ est en communication avec son élément porteur associé via la chambre annulaire 100 du tiroir T₁.

Pour obtenir une suspension dite intermédiaire, l'électrovanne EV₃ devra délivrer une première pression P₁, par exemple égale à 40 bars. Dès lors, comme on le comprend mieux en se reportant à la figure 8, le tiroir T₁ poussera la coupelle 102 qui viendra en butée contre la partie supérieure de la coupelle extérieure 103. Quant au tiroir T₂, il viendra en butée en 106. Par conséquent, seul le bloc hydropneumatique B₂ sera en communication avec l'élément porteur via la chambre annulaire 104. En effet, le tiroir T₁, dans la position visible sur la figure 8, obturera la liaison hydraulique du bloc hydropneumatique B₁, avec l'élément porteur, puisque la partie 108 du tiroir T₁ entre les deux chambres annulaires 100 et 101 empêchera ladite liaison.

La position suspension dite souple sera obtenue pour une pression P₂ délivrée par l'électrovanne EV₃ supérieure à la pression P₁, soit par exemple une pression P₂ de 80 bars. Pour une telle pression, le tiroir T₂ ne bouge pas, de sorte que la liaison hydraulique entre le bloc hydropneumatique B₂ et l'élément porteur est toujours obtenue. Par contre, le tiroir T₁, comme on le comprend mieux en se reportant à la figure 9, se déplacera et poussera non seulement la coupelle 102 se trouvant dans la position de la figure 8, mais entraînera la coupelle 103 jusqu'à venir en butée en 109. Dans cette position de tiroir T₁, la communication du bloc hydropneumatique B₁ avec l'élément porteur sera obtenue via la chambre annulaire 101 située entre la partie de plus grand diamètre 108 et l'extrémité 110 du tiroir opposée à l'extrémité coopérant avec la coupelle 102. Au total, les deux blocs hydropneumatiques B₁ et B₂ seront donc hydrauliquement reliés à l'élément porteur associé à chaque roue du véhicule.

On observera encore que dans tous les cas de figure, s'il y a une défaillance électrique, le système se positionne automatiquement en position de suspension ferme, comme montré sur les figures 4 à 6, puisque l'électrovanne, qui ne sera plus excitée, se mettra automatiquement en position d'échappement, de sorte que les ressorts R₁, R₂ et R₃ ramèneront toujours les tiroirs T₁ et T₂ en butée en 107.

On a donc réalisé suivant l'invention une suspension hydropneumatique à amortissement et raideur variables qui, pour la régulation, ne nécessite que de simples tiroirs et une ou plusieurs électrovannes.

Bien entendu, l'invention n'est nullement limitée aux modes de réalisation décrits et illustrés qui n'ont été donnés qu'à titre d'exemple.

Au contraire, l'invention comprend tous les équivalents techniques des moyens décrits ainsi que leurs combinaisons si celles-ci sont effectuées suivant les revendications.

## Revendications

1. Suspension hydropneumatique pour véhicule automobile, comprenant essentiellement un vérin hydraulique (V₁, V₂, V₃, V₄) associé à chaque roue du véhicule et muni de deux accumulateurs hydropneumatiques (B₁, B₂) de caractéristiques élastiques différentes et susceptibles de coopérer sélectivement par l'intermédiaire de leur moyen amortisseur respectif (A) avec ledit vérin hydraulique, tandis qu'un moyen de régulation à tiroir commandé manuellement ou automatiquement par l'intermédiaire de paramètres de fonctionnement du véhicule permet la mise en communication du vérin hydraulique (V₁, V₂, V₃, V₄) associé à chaque roue, soit avec les deux accumulateurs (B₁, B₂) de façon simultanée pour obtenir une suspension dite souple, soit uniquement avec l'un (B₂) ou l'autre (B₁) des deux accumulateurs pour obtenir respectivement une suspension dite intermédiaire ou une suspension dite ferme, caractérisée en ce que ledit moyen de régulation est constitué par deux tiroirs (T₁, T₂) en liaison hydraulique avec le vérin hydraulique (V₁, V₂, V₃, V₄) de chaque roue et respectivement reliés aux deux accumulateurs hydropneumatiques équipant chaque vérin, ces deux tiroirs étant pilotés par une (EV₃) ou plusieurs électrovannes (EV₁, EV₂).

2. Suspension selon la revendication 1, caractérisée en ce qu'elle comprend deux électrovannes (EV₁, EV₂) agissant sur les tiroirs (T₁, T₂) de telle façon qu'on obtienne une suspension ferme lorsque les deux électrovannes sont à l'échappement, une suspension intermédiaire lorsque les deux électrovannes sont excitées et donc mises en communication avec une source de pression, et une suspension souple lorsque l'une (EV₁) des électrovannes est excitée et l'autre (EV₂) mise à l'échappement.

3. Suspension selon la revendication 2, caractérisée en ce que la structure des deux tiroirs (T₁, T₂) en liaison hydraulique avec chaque vérin (V₁, V₂, V₃, V₄) est telle qu'à la mise à l'échappement des deux électrovannes (EV₁, EV₂) seul l'un (T₁) des deux tiroirs assure la communication de vérin avec l'un (B₁) des deux accumulateurs, qu'à l'excitation des deux électrovannes, seul l'autre tiroir (T₂) assure la communication du vérin avec l'autre accumulateur (B₂), et qu'à la mise à l'échappement de l'une (EV₂) des électrovannes et à l'excitation de l'autre électrovanne (EV₁), les deux tiroirs assurent respectivement la communication du vérin avec les deux accumulateurs (B₁, B₂).

4. Suspension selon la revendication 1, caractérisée en ce qu'elle comprend une seule électrovanne (EV₃) pouvant délivrer deux pressions différentes (P₁, P₂) et agissant sur les tiroirs (T₁, T₂) de telle façon qu'on obtient une suspension ferme lorsque l'électrovanne est à l'échappement, une suspension intermédiaire lorsque l'électrovanne délivre une première pression (P₁) et une suspension souple lorsque l'électrovanne délivre une deuxième pression (P₂) supérieure à la première.

5. Suspension selon la revendication 4, caractérisée en ce que la structure des deux tiroirs (T₁, T₂) en liaison hydraulique avec chaque vérin (V₁, V₂, V₃, V₄) est telle qu'à la mise à l'échappement de l'électrovanne (EV₃) seul l'un des deux tiroirs ou premier tiroir (T₁) assure la communication du vérin avec l'accumulateur (B₁) associé à ce tiroir, qu'à l'excitation de l'électrovanne (EV₃) pour délivrer la première pression (P₁), seul l'autre tiroir ou deuxième tiroir (T₂) assure la communication du vérin avec l'accumulteur (B₂) associé à ce deuxième tiroir en agissant à l'encontre de la force d'un ressort (R₃) alors que le premier tiroir est fermé en agissant à l'encontre de la force d'un autre ressort (R₁), et qu'à l'excitation de l'électrovanne (EV₃) pour délivrer la deuxième pression (P₂), le premier tiroir (T₁) se déplaçant à l'encontre de force d'encore un autre ressort (R₂) assure la communication du vérin avec l'accumulateur (B₁) associé à ce premier tiroir (T₁) alors que le deuxième tiroir (T₂) assure lui aussi la communication du vérin avec son accumulateur associé (B₂).

6. Suspension selon la revendication 5, caractérisée en ce que deux des ressorts précités (R₁, R₂) sollicitent respectivement deux coupelles (102, 103) à emboîtement dont l'une (102) prend constamment appui sur l'extrémité du premier tiroir (T₁).

7. Suspension selon l'une des revendications précédentes, caractérisée en ce que les deux tiroirs associés au vérin de chaque roue avant sont parallèles tandis que les deux tiroirs associés au vérin de chaque roue arrière sont orthogonaux.

8. Suspension selon l'une des revendications précédentes, caractérisée en ce qu'aux deux électrovannes précitées (EV₁, EV₂) ou à l'électrovanne unique (EV₃) est raccordé un calculateur électronique (18) lui-même relié à des capteurs (19) détectant certains paramètres de fonctionnement du véhicule.

## Patentansprüche

1. Hydropneumatische Aufhängung für ein Kraftfahrzeug mit im wesentlichen einem jedem Rad des Fahrzeugs zugeordneten und mit zwei Hydroblasenspeichern (B₁,B₂) unterschiedlicher elastischer Eigenschaften versehenen hydraulischen Kraftzylinder (V₁, V₂, V₃, V₄), welche fähig sind, über ihren jeweiligen Dämpfer (A) mit dem besagten hydraulischen Kraftzylinder wahlweise zusammenzuwirken, während ein Regelungsmittel mit einem mit der Hand oder selbsttätig über Betriebsparameter des Fahrzeugs betätigten Schieber das Inverbindungsetzen des jedem Rad zugeordneten hydraulischen Kraftzylinders (V₁, V₂, V₃, V₄) entweder mit den beiden Speichern (B₁, B₂) in gleichzeitiger Weise, um eine sogenannte weiche Aufhängung zu erlangen, oder nur mit dem einen (B₂) oder dem anderen (B₁) der beiden Speichern, um jeweils eine sogenannte Zwischenaufhängung oder eine sogenannte harte Aufhängung zu erlangen, gestattet, dadurch gekennzeichnet, dass das besagte Regelungsmittel durch zwei mit dem hydraulischen Kraftzylinder (V₁, V₂, V₃, V₄) jedes Rades in hydraulischer Verbindung stehende und jeweils mit den beiden, jeden Kraftzylinder ausrüstenden Hydro- Blasenspeichern verbundene Schieber (T₁, T₂) gebildet wird, wobei diesen beiden Schieber durch ein oder mehrere Elektroventil (EV₃) oder Elektroventile (EV₁, EV₂) gesteuert werden.

2. Aufhängung nach Anspruch 1, dadurch gekennzeichnet, dass sie zwei auf die Schieber (T₁, T₂) derart einwirkende Elektroventile (EV₁, EV₂) umfasst, dass man eine harte Aufhängung, wenn die beiden Elektroventile auf Auslass geschaltet sind, eine Zwischenaufhängung, wenn die beiden Elektroventile erregt also in Verbindung mit einer Druckquelle gesetzt werden und eine weiche Aufhängung, wenn eines (EV₁) der Elektroventile erregt und das andere (EV₂) auf Auslass geschaltet wird, erzielt.

3. Aufhängung nach Anspruch 2, dadurch gekennzeichnet, dass der Aufbau der beiden mit jedem Kraftzylinder (V₁, V₂, V₃, V₄) in hydraulischer Verbindung stehenden Schieber (T₁, T₂) derart ist, dass beim Schalten der beiden Elektroventile (EV₁, EV₂) auf Auslass, nur der eine (T₁) der beiden Schieber die Verbindung des Kraftzylinders mit einem (B₁) der beiden Speicher gewährleistet, dass bei Erregung der beiden Elektroventile, nur der andere Schieber (T₂) die Verbindung des Kraftzylinders mit dem anderen Speicher (B₂) bewirkt und dass beim Schalten des einen (EV₂) der Elektroventile auf Auslass und bei Erregung des anderen Elektroventils (EV₁), die beiden Schieber jeweils die Verbindung des Kraftzylinders mit den beiden Speichern (B₁, B₂) gewährleisten.

4. Aufhängung nach Anspruch 1, dadurch gekennzeichnet, dass sie ein einziges, für die Lieferung von zwei verschiedenen Drücken (P₁, P₂) fähiges und auf die Schieber (T₁, T₂) derart einwirkendes Elektroventil (EV₃) aufweist, dass man eine harte Aufhängung, wenn das Elekroventil auf Auslass geschaltet ist, eine Zwischenaufhängung, wenn das Elektroventil einen ersten Druck (P₁) liefert und eine weiche Aufhängung, wenn das Elektroventil einen zweiten Druck (P₂), der höher als der erste ist, liefert, erzielt.

5. Aufhängung nach Anspruch 4, dadurch gekennzeichnet, dass der Aufbau der beiden mit jedem Kraftzylinder (V₁, V₂, V₃, V₄) in hydraulischer Verbindung stehenden Schieber (T₁, T₂) derart ist, dass beim Schalten des Elektroventils (EV₃) auf Auslass, nur einer der beiden Schieber bzw. der erste Schieber (T₁) die Verbindung des Kraftzylinders mit dem diesem Schieber zugeordneten Speicher (B₁) gewährleistet, dass bei Erregung des Elektroventils (EV₃), um den ersten Druck (P₁) zu liefern, nur der andere Schieber bzw. zweite Schieber (P₂) die Verbindung des Kraftzylinders mit dem diesen zweiten Schieber zugeordneten Speicher (B₂) durch Wirkung entgegen der Kraft einer Feder (R₃) bewerkstelligt, während der erste Schieber durch Wirkung entgegen der Kraft einer anderen Feder (R₁) geschlossen ist und dass bei Erregung des Elektroventils (EV₃), um den zweiten Druck (P₂) zu liefern, der erste sich entgegen der Kraft noch einer anderen Feder (R₂) bewegende Schieber (T₁) die Verbindung des Kraftzylinders mit dem diesem ersten Schieber (T₁) zugeordneten Speicher (B₁) gewährleistet, während der zweite Schieber (T₂) seinerseits ebenfalls die Verbindung des Kraftzylinders mit seinem zugeordneten Speicher (B₂) bewirkt.

6. Aufhängung nach Anspruch 5, dadurch gekennzeichnet, dass die beiden vorgenannten Federn (R₁, R₂) jeweils zwei Teller (102,103) mit Ineinanderschiebung beaufschlagen, von denen der eine (102) sich stetig an dem Ende des ersten Schiebers (T₁) abstützt.

7. Aufhängung nach einem der vorangehenden Ansprüche, dadurch gekennzeichnet, dass die beiden dem Kraftzylinder jedes Vorderrades zugeordneten Schieber parallel sind, während die beiden dem Kraftzylinder jedes Hinterrades zugeordneten Schieber orthogonal sind.

8. Aufhängung nach einem der vorangehenden Ansprüche, dadurch gekennzeichnet, dass an die beiden vorgenannten Elektroventile (EV₁, EV₂) oder an das einzige Elektroventil (EV₃) ein elektronischer Rechner (18) angeschlossen ist, der selbst mit gewisse Betriebsparameter des Fahrzeugs ermittelnden Messwertgebern (19) verbunden ist.

## Claims

1. Hydropneumatic suspension for an automotive vehicle essentially comprising a hydraulic jack (V₁, V₂, V₃, V₄) associated with each wheel of the vehicle and provided with two hydropneumatic accumulators (B₁, B₂) with different elastic characteristics and capable of co-operating selectively through the medium of their respective damping means (A) with. the said hydraulic jack whereas a regulation means with a spool controlled manually or automatically through the medium of operating parameters of the vehicle permits the putting in communication of the hydraulic jack (V₁, V₂, V₃, V₄) associated with each wheel either with both accumulators (B₁, B₂) in a simultaneous manner to obtain a so-called soft suspension or only with one (B₂,) or the other (B₁) of both accumulators to obtain a so-called intermediate suspension or a so-called steady suspension, respectively, characterized in that the said regulation means is constituted by two spools (T₁, T₂) in hydraulic connection with the hydraulic jack (V₁, V₂, V₃, V₄) of each wheel and respectively connected to both hydropneumatic accumulators fitting each jack, these two spools being steered by one (EV₃) or several electrovalves (EV₁, EV₂)

2. Suspension according to claim 1, characterized in that it comprises two electrovalves (EV₁, EV₂) acting upon the spools (T₁, T₂) in such a manner that one obtains a steady suspension when both electrovalves are opening to the exhaust, an intermediate suspension when both electrovalves are energized and thereby put in communication with a pressure source and a soft suspension when one (EV₁) of the electrovalves is energized and the other (EV₂) is opening to the exhaust.

3. Suspension according to claim 2, characterized in that the structure of both spools (T₁, T₂) in hydraulic connection with each jack (V₁, V₂, V₃, V₄) is such that upon the putting of both electrovalves (EV₁, EV₂) to the exhaust, only one (T₁) of both spools provides the communication of the jack with one (B₁) of both accumulators, that upon the energizing of both electrovalves, only the other spool (T₂) provides the communication of the jack with the other accumulator (B₂) and that upon putting to the exhaust of one (EV₂) of the electrovalves and upon the energizing of the other electrovalve (EV₁), both spools are providing the communication of the jack with both accumulators (B₁, B₂), respectively.

4. Suspension according to claim 1, characterized in that it comprises one single electrovalve (EV₃) which may deliver two different pressures (P₁, P₂) and acting upon the spools (T₁, T₂) in such a fashion that one obtains a steady suspension when the electrovalve is put to the exhaust, an intermediate suspension when the electrovalve delivers a first pressure (P₁) and a soft suspension when the electrovalve delivers a second pressure (P₂) higher than the first one.

5. Suspension according to claim 4, characterized in that the structure of both spools (T₁, T₂) in hydraulic connection with each jack (V₁, V₂, V₃, V₄) is such that upon the putting to the exhaust of the electrovalve (EV₃), only one of the two spools or the first spool (T₁) provides the communication of the jack with the accumulator (B₁) associated with this spool, that upon the energizing of the electrovalve (EV₃) to deliver the first pressure (P₁), only the other spool or second spool (T₂) provides the communication of the jack with the accumumator (B₂) associated with this second spool by acting against the force of a spring (R₃) whereas the first spool is closed by acting against the force of another spring (R₁) and that upon the energizing of the electrovalve (EV₃) to deliver the second pressure (P₂), the first spool (T₁) moving against the force of still another spring (R₂) ensures the communication of the jack with the accumulator (B₁) associated with the first spool (T₁) whereas the second spool (T₂) also ensures itself the communication of the jack with its associated accumulator (B₂).

6. Suspension according to claim 5, characterized in that both aforesaid springs (R₁, R₂) are acting upon two interfitting cups (102, 103), respectively, one (102) of which is constantly bearing upon the end of the first spool (T₁).

7. Suspension according to one of the foregoing claims, characterized in that both spools associated with the jack of each front wheel are parallel whereas both spools associated with the jack of each rear wheel are orthogonal.

8. Suspension according to one of the foregoing claims, characterized in that to both aforesaid electrovalves (EV₁, EV₂) or to the single electrovalve (EV₃) is connected an electronic computer (18) itself connected to sensors (19) detecting some operating parameters of the vehicle.
